# EUROPEAN PATENT SPECIFICATION

(11) **EP 2 185 990 B1**
(45) Date of publication and mention of the grant of the patent: **21.12.2011**
(21) Application number: 08788394.8
(22) Date of filing: 21.08.2008
(51) Int. Cl.: G05D 23/02

(54) **FLOW CONTROL**
FLUSSSTEUERUNG
RÉGULATION DE DÉBIT

(30) Priority: 23.08.2007 GB 0716470
(43) Date of publication of application: 19.05.2010
(73) Proprietor: Tomlinson, Andrew Paul, Wincobank Sheffield S9 1NR (GB)
(72) Inventor: Tomlinson, Andrew Paul, Wincobank Sheffield S9 1NR (GB)
(74) Representative: Harkness, Katherine Joy
(86) International application number: PCT/GB2008/002830
(87) International publication number: WO 2009/024788

(56) References cited:
- EP-A- 0 918 270

## Description

### BACKGROUND OF THE INVENTION

### 1. Field of the Invention

The present invention relates to apparatus for, controlling the flow of heated water from a boiler to a water outlet, a heated water delivery system and a method of supplying heated water from a boiler through a heated water supply to a water outlet.

### 2. Description of the Related Art

Systems are known for controlling the flow of water, which usually involve the manual adjustment of a tap or valve. Furthermore, an outlet tap may be controlled manually in order to control the flow of water. However, when receiving water from a boiler, such as a gas fired combination boiler, it is possible for the flow of water to be reduced too far such that the boiler then becomes too hot and the water is shut off. Alternatively, if the flow of water is too great, a significant volume of water will flow through the boiler during a warming up period, primarily due to the warming up of heat exchanging equipment.

EP 0 918 270 (Eltek SPA) discloses a thermostatic valve for controlling the flow of a fluid. This thermostatic valve provides for a minimum flow through the valve at all times and maintains an opening in the valve at a constant level throughout.

### BRIEF SUMMARY OF THE INVENTION

According to an aspect of the present invention, there is provided apparatus for controlling the flow of heated water from a boiler to a water outlet, comprising: a main housing defining an inlet, an outlet and a flow path extending from said inlet to said outlet, a variable opening between said inlet and said outlet, a permanent opening between said inlet and said outlet, and a temperature sensitive adjustment mechanism configured to adjust said variable opening between a fully closed position and an open position; wherein said temperature sensitive adjustment mechanism comprises a temperature sensitive device comprising a rigid housing that houses an expandable material with a degree of expansion that increases with increase in temperature, and a rigid rod having a first end operatively connected to said expandable material and a second end that is fixed relative to said main housing, whereby said temperature sensitive adjustment mechanism is configured such that said rigid housing is configured to move relative to said second end in response to a change of water temperature such that the total water flow increases with increased temperature; characterised in that said permanent opening includes an adjustment device for adjusting the degree of permanent flow.

According to a second aspect of the present invention, there is provided a heated water delivery system, comprising: a boiler; a plurality of water outlets; a cold water supply to said boiler; a heated water supply from said boiler for supplying heated water to a water outlet; and apparatus for controlling the flow of heated water from a boiler to an outlet, located within said heated water supply.

According to a third aspect of the present invention, a method of supplying heated water from a boiler through a heated water supply to a water outlet, said method comprising the steps of: receiving apparatus for controlling the flow of heated water from a boiler to an outlet, and locating said received apparatus within said heated water supply.

### BRIEF DESCRIPTION OF THE SEVERAL VIEWS OF THE DRAWINGS

Figure 1 shows steps performed in the provision of heated water;
Figure 2 shows a system for producing hot water;
Figure 3 shows an exploded view of a flow control device;
Figure 4 shows a temperature sensitive device in a first condition;
Figure 5 shows a temperature sensitive device in a second condition;
Figure 6 shows a flow control device in an initial position;
Figure 7 shows a flow control device in a subsequent position; and
Figure 8 shows steps in the operation of a flow control device.

### DESCRIPTION OF THE BEST MODE FOR CARRYING OUT THE

### INVENTION

### Figure 1

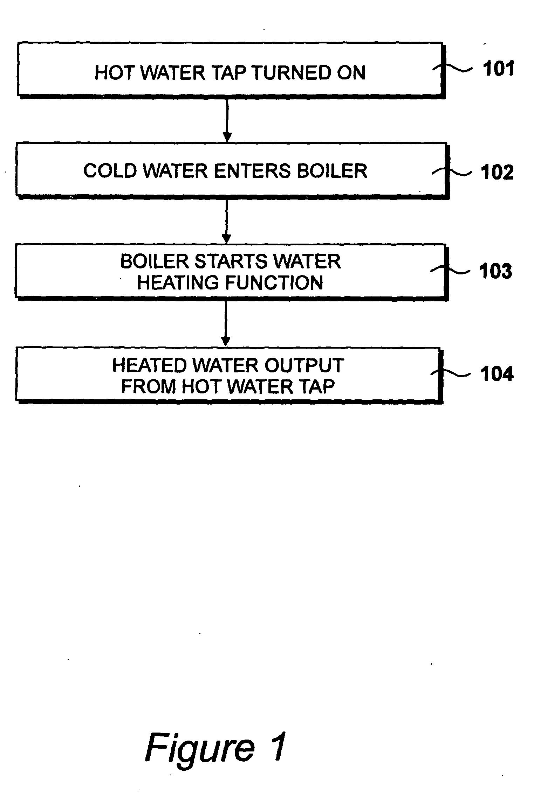

Figure 1 shows steps performed in the provision of heated water. At step 101, a hot water tap is turned on. In response, cold water enters a boiler at step 102 whereafter the boiler starts a water heating function at step 103. At step 104 heated water is output from the opened hot water tap.

A problem known to exist with some types of boiler is that water is often output from the opened hot water tap that is at a temperature lower that the desired hot water temperature for some time until the desired hot water temperature is reached. This is often due to a delay between water entering the boiler for heating and the boiler heating the water to the desired temperature. In some situations, the water running from the hot water tap that is lower than the desired temperature is not utilised for its intended purpose. In addition to the waste of this water itself, energy is wasted by the boiler heating the wasted water.

Some types of boiler hold a reserve quantity of water that is heated to the desired temperature. A problem found with such a boiler is that when the hot water tap is turned on, the reserve quantity of water is delivered at the preferred temperature, but this is followed by water having a lower temperature, which is in turn followed by water at the desired temperature. This temperature fluctuation is again due to a delay between cold water entering the boiler for heating and the boiler heating the water to the desired temperature.

In some systems, it is possible to influence the hot water output by varying the degree of which the hot water tap is open. Specifically, in such systems, it is possible to increase the output water temperature by reducing the output water flow. This, in effect, holds back the water entering the boiler for heating for longer, in order to increase the duration of heating of output water. However, it is often difficult to predict the degree of opening or closing of a tap required to achieve the desired output water temperature. This can be even more difficult to judge where a tap accommodates only a quarter turn of the tap head or lever, for example, between the fully closed position and the fully open position.

It is also found that some boilers will shut off water flow when a maximum temperature threshold is sensed. This may exacerbate temperature fluctuations in the heated water due to fluctuations in water flow. Operational deviations may also be introduced through unsatisfactory initial setting up of a boiler, or through insufficient maintenance for example.

It is desirable to reduce the volume of heated output water that is not at the desired temperature and to reduce fluctuations in the temperature of the heated output water.

### Figure 2

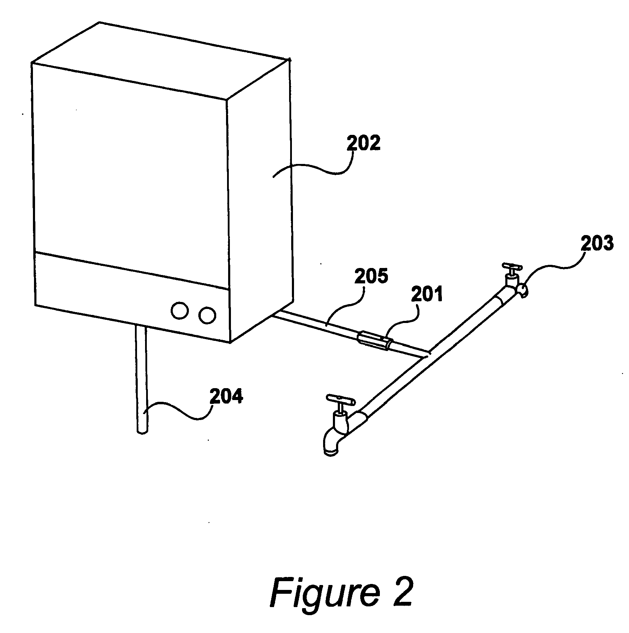

Figure 2 shows a hot water heating system comprising a valve 201 for controlling the flow of heated water from a boiler 202 to at least one of a plurality of water outlets, such as tap 203. Boiler 202 is configured to receive cold water from a mains supply 204.

The boiler in this example is a combination boiler configured to provide central heating in addition to water heating. In this example, boiler 202 burns gas to produce heat. Boiler 202 includes a heat exchanger for the supply of hot water and water is directed to that heat exchanger upon detecting the flow of water to one of the plurality of water outlets.

Flow control valve 201 is located in a heated water supply 205 between the boiler and the outlet such that the flow of water is limited during an initial period, during which the temperature of the water supplied from the boiler is relatively low, and the flow of water is increased as the temperature of the boiler heated water increases. In this example, the heated water supply 205 comprises a pipe. As will be described in further detail below, the flow control valve 201 functions to reduce water flow while boiler components are heated, thus reducing the time required for the boiler to reach a preferred operating temperature.

### Figure 3

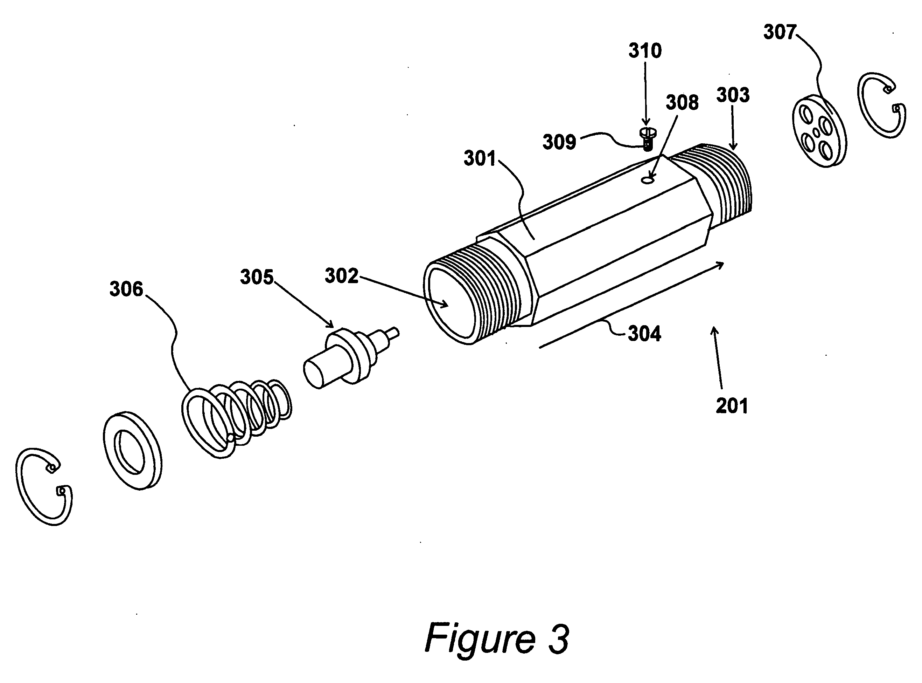

Figure 3 shows an exploded view of a flow control device. Flow control device 201 comprises a main housing 301 defining an inlet, indicated by arrow 302, and an outlet, indicated by arrow 303. The flow control valve 201 is configured to receive a flow of water therethrough, in the direction indicated by arrow 304, from the inlet to the outlet.

The flow control device includes a permanent opening (not shown in this Figure) between the inlet and the outlet and a variable opening (not shown in this Figure) between the inlet and the outlet. The permanent opening allows a relatively low flow of water at any temperature.

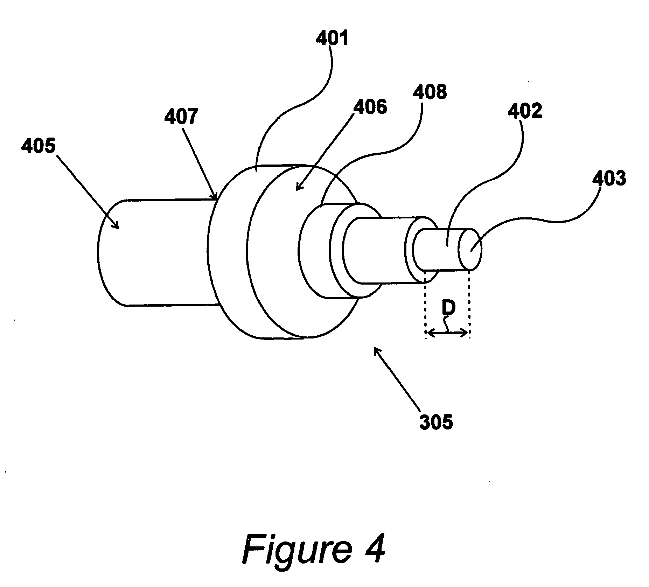

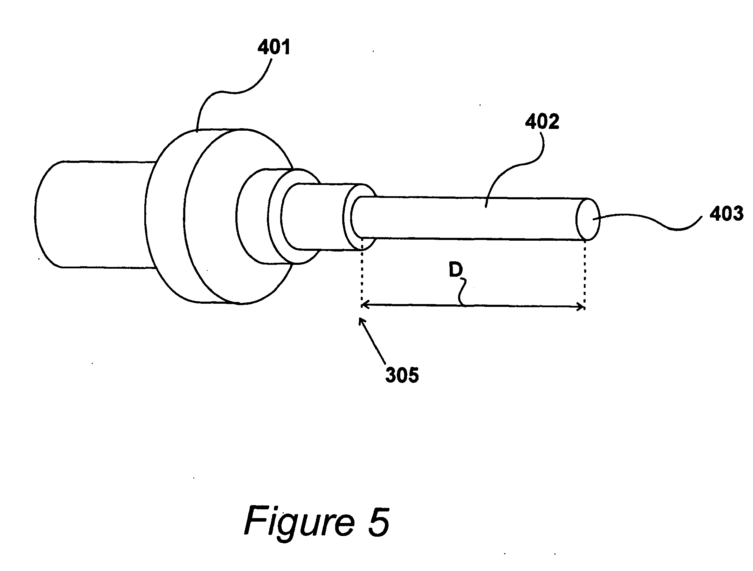

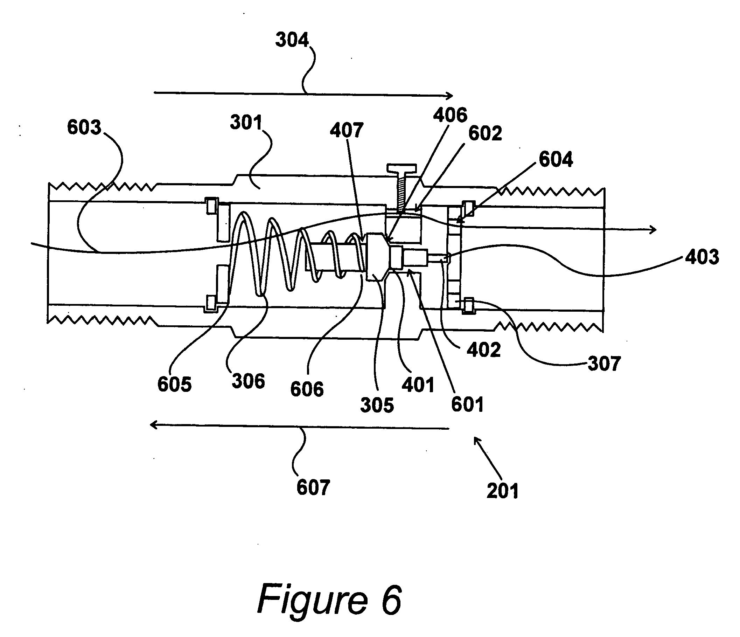

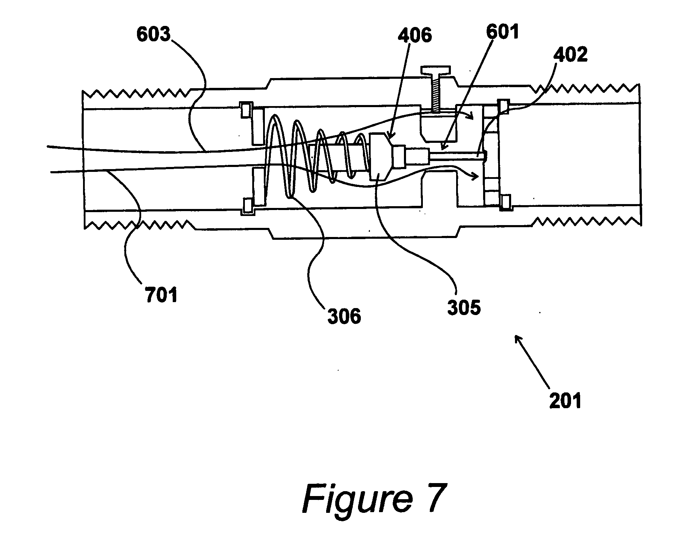

Flow control device 201 also includes a temperature sensitive adjustment mechanism configured to adjust the variable opening between a fully closed position and an open position. The temperature sensitive adjustment mechanism comprises a temperature sensitive device 305, a spring 306 and a retaining wall element 307. The temperature sensitive device is described in further detail with reference to Figures 4 and 5, and the temperature sensitive adjustment mechanism is described in further detail with reference to Figures 6 and 7. The variable opening is initially closed to inhibit cold water flow but is configured to subsequently open to allow heated water flow.

Both the inlet end and the outlet end have a connecting arrangement to allow the flow control device 201 to be secured relative to hot water supply piping. The connecting arrangement may vary between examples, and may comprise a threaded component, a clip or a washer for example. In this example, the main housing 301 is configured to be retained in line and substantially coaxial with hot water supply piping. The main housing may have any shape cross-section, but preferably has a regular shape cross-section, such as a substantially cylindrical shape, a substantially hexagonal shape or a substantially octagonal shape for example.

Main housing 301 defines an aperture 308 through the outer wall of the housing 301, through which a permanent opening adjustment device 309 extends into the main housing 301. The permanent opening adjustment device 309 allows selection of a degree of opening of the permanent opening. The permanent opening adjustment device 309 is provided with position adjustment means 310, for facilitating configuration of the permanent opening adjustment device between a full flow position and a restricted flow position.

In this example, permanent opening adjustment device 309 comprises a rotatable threaded element. The threaded element takes the form of a screw and the position adjustment means 310 takes the form of a screw head that defines a slot for allowing engagement of a tool, such as a screwdriver for example, to facilitate rotation thereof. In an alternative example, a threaded element is provided that takes the form of a rod that defines a channel therethrough that extends substantially perpendicularly to the axis of the rod. Thus, in the full flow position, the whole of the upstream channel opening is exposed to water flow, in the direction of arrow 304, and in the restricted flow position a reduced area of the upstream channel opening is exposed to the water flow.

By allowing the permanent opening to be adjusted to suit a particular water heating system, the boiler of that system may be prevented from shutting down its heating function in response to the detection of a change of temperature of the boiler heated water.

### Figure 4

Temperature sensitive device 305 is shown in Figure 4. The device comprises a rigid housing 401, an expandable material (not shown) housed within the rigid housing and a rod 402 that has a first end (not shown) operatively connected to the expandable material and a second end 403. In this example, the expandable material is configured to expand when heated. The expandable material may be a wax. The wax may be provided in the form of a wax capsule.

In this embodiment, the expandable material is a wax configured to expand when heated such that the degree of expansion increases with increasing temperature. Similarly, the expandable material is configured to contract in response to a decrease in temperature, with the degree of contraction of the expandable material increasing with decreasing temperature. In response to the wax expanding, the rod 402 is pushed outwards such that the distance between the second end 403 and the rigid housing 401 increases.

In Figure 4, the temperature sensitive device 305 is shown in a fully retracted condition. In the fully retracted condition, the distance D between the second end 403 of rod 402 and the rigid housing 401 is at the shortest possible.

Rigid housing 401 comprises an upstream location portion 405 and a plug portion 406. In this example, the outer surfaces of temperature sensitive device 305 are cylindrical. However, in alternative examples, the shape of component parts may vary. Plug portion 405 has a greater diameter than that of upstream location portion 405 such that a first shoulder 407 is provided between upstream location portion 405 and plug portion 406. The plug portion also has a greater diameter than that of rod 402. Plug portion 406 is profiled to present an inwardly sloping surface, with end 408 of the sloping surface, towards the second end 403 of rod 402 having a smaller diameter.

### Figure 5

Figure 5.also shows temperature sensitive device 305. In Figure 5, the temperature sensitive device 305 is shown in a fully extended condition. In the fully retracted condition, the distance D between the second end 403 of rod 402 and the rigid housing 401 is at the greatest possible.

### Figure 6

Figure 6 shows flow control device 201 in an initial position, in which the variable opening, indicated at 601, is closed. However, the permanent opening, indicated at 602, allows water to flow generally in the direction of arrow 304. In the shown position of flow control device 201, water may flow along the path indicated by arrow 603, through the permanent opening adjustment 602, and through an aperture 604 defined in retaining wall element 307.

In the shown example, the variable opening 601 is substantially coaxial with a central water flow conduit and permanent opening 602 is defined in a surrounding flange. In this illustrated example, the surrounding flange includes a single peripheral hole, in order to provide the permanent opening, however in an alternative embodiment the surrounding flange includes a plurality of peripheral holes.

The permanent opening 602 allows a relatively low water flow at any temperature. When a hot water tap is turned on, the flow of water through flow control valve 201 is restricted when the temperature of the water is relatively low, thereby reducing the time required for the boiler to reach a preferred operating temperature. As will be described more fully below, the variable opening, which is initially closed, is configured to subsequently open to allow heated water having a higher temperature to flow.

In use, the upstream location portion 405 of temperature sensitive device 305 locates within spring 306. A first end 605 of spring 306 abuts against first shoulder 407. The second end 606 of the spring 306 is fixed relative to the main housing 301. In use, the second end 403 of rod 402 is fixed relative to the main housing 301. In this example, the second end 403 of rod 402 is located within retaining wall element 307, which in turn is fixed relative to the main housing.

In the arrangement shown in Figure 6, the variable opening 601 is closed by plug portion 406 of the temperature sensitive device 305. Spring 306 is arranged to bias the temperature sensitive device 305 towards the closed position of the variable opening. As previously described, the temperature sensitive device 305 is configured such that the distance between the rigid housing 401 and the second end 403 of rod 402 is configured to increase in response to an increase in water temperature. Thus, in response to an increase in water temperature, the rod 402 extends further from the rigid housing 401. As also previously described, the second end 403 of the rod 402 is fixed relative to the main housing 301. Thus, in response to an increase in water temperature, the rod 402 extends further out from rigid housing 401, in turn forcing the plug portion 406 upstream, in the direction indicated by arrow 607. As the plug portion 406 of temperature sensitive device 305 travels upstream, the variable opening 601 is opened. It is to be appreciated that the temperature sensitive adjustment mechanism of the flow control device is configured such that said rigid housing is configured to move relative to said second end in response to a change of water temperature.

### Figure 7

Figure 7 shows flow control device 201 in a subsequent position, in which variable opening 601 is open.As a result of incoming water being heated by the boiler, the temperature inside the flow control valve 201 increases and this, in turn, causes temperature sensitive device 305 to expand in length. This action results in the plug portion 406 traveling upstream to open the variable opening 601.

It can be seen that spring 306 has moved into a compressed condition to allow the increased length of the temperature sensitive device 305 to be accommodated within the flow control device 201. In this way, the total water flow through the flow control device 201 is increased as the temperature of the boiler heated water increases.

In the shown condition of the flow control device 201, water may continue to flow along the path 603 through the permanent opening of channel 316, and can now also flow along path 701 through the opened variable opening 601.

It is to be appreciated that the flow control device 201 is configured to inhibit full flow of boiler heated water until that water flow is detected as being at a preferred operating temperature. Thus, the flow control device functions to regulate both water flow in combination with water temperature.

When the drawing hot water tap is turned off, the water temperature drops, and the wax of temperature sensitive device 305 cools and contracts in response to the decreasing in the temperature of the water inside the flow control device 201. In response, rod 402 retracts into rigid housing 401 and spring 306 expands in length. In this way, plug portion 406 is returned to the initially closed position illustrated in Figure 6.

### Figure 8

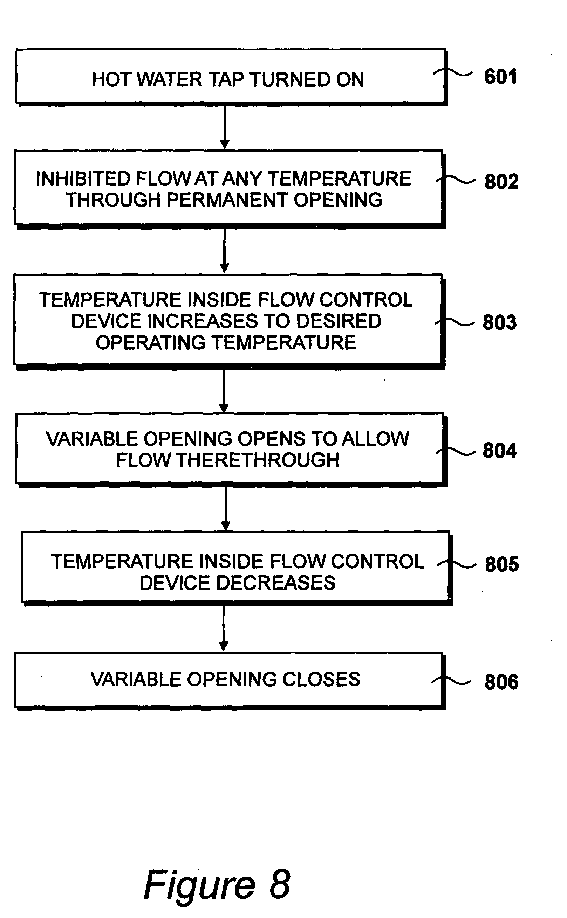

Figure 8 shows steps in the operation of the flow control device described herein within a hot water heating system including a boiler.

At step 801 a hot water tap is turned on, and water is allowed to flow through the boiler. In response, at step 802, water at whatever the temperature it is at flows through the permanent opening. This inhibited initial flow assists the temperature inside the flow control device to rise and achieve the desired operating temperature. The internal workings of the flow control device responds to the temperature of the water approaching the desired operating temperature. As this temperature is achieved, at step 803, the variable opening opens, at step 804, to allow water to flow therethrough. Thus uninhibited flow of water at the desired temperature is accomplished.

When the temperature inside the flow control valve subsequently decreases, as at step 805, the temperature sensitive portion of the flow control device responds to close the variable opening, at step 806.

The temperature inside the flow control valve will decrease when the hot water tap is turned off. This results in the output water flow being stopped, the boiler ceasing its water heating function and the temperature of the water inside the flow control device cooling. The temperature inside the flow control valve may, however, decrease in response to boiler operation failure, and again the flow control device will react to inhibit the flow of water therethrough and hence the issuance of water from the hot tap at a relatively low temperature.

## Claims

1. Apparatus (201) for controlling the flow of heated water from a boiler to a water outlet, comprising:
a main housing (301) defining an inlet (302), an outlet (303) and a flow path (304) extending from said inlet to said outlet,
a variable opening (601) between said inlet and said outlet,
a permanent opening (602) between said inlet and said outlet, and
a temperature sensitive adjustment mechanism configured to adjust said variable opening between a fully closed position and an open position; and
said temperature sensitive adjustment mechanism comprises a temperature sensitive device (305) comprising a rigid housing (401) that houses an expandable material with a degree of expansion that increases with increase in temperature, and a rigid rod (402) having a first end operatively connected to said expandable material and a second end (403) that is fixed relative to said main housing, whereby said temperature sensitive adjustment mechanism is configured such that said rigid housing is configured to move relative to said second end in response to a change of water temperature such that the total water flow increases with increased temperature; **characterised in that**:
said permanent opening includes an adjustment device (309) for adjusting the degree of permanent flow.

2. Apparatus according to claim 1, wherein said expandable material is a wax.

3. Apparatus according to claim 1 or claim 2, wherein the variable opening is substantially coaxial with a central water flow and said permanent opening is a peripheral hole in a surrounding flange.

4. Apparatus according to claim 3, wherein said surrounding flange includes a plurality of peripheral holes to provide the permanent opening.

5. Apparatus according to claim 1, wherein said adjustment device includes a threaded element (309).

6. Apparatus according to claim 5, wherein said threaded element defines a channel therethrough.

7. Apparatus according to claim 6, wherein said threaded element extends into the permanent opening, such that the area of the upstream channel opening that is exposed to water flow is adjusted in response to turning said threaded element.

8. Apparatus according to any of claims 1 to 7, wherein said main housing is configured to be retained in line and substantially coaxial with hot water supply pipes (205).

9. A heated water delivery system, comprising:
a boiler (202);
a plurality of water outlets (203);
a cold water supply (204) to said boiler;
a heated water supply (205) from said boiler for supplying heated water to a water outlet; and
apparatus (201) for controlling the flow of heated water from a boiler to an outlet as claimed in claim 1 and located within said heated water supply.

10. A heated water delivery system according to claim 9, wherein said boiler includes a heat exchanger for the supply of hot water, wherein heated water is directed to said heat exchanger upon detection of the flow of water to one of said water outlets.

11. A method of supplying heated water from a boiler through a heated water supply to a water outlet, said method comprising the steps of:
receiving apparatus according to claim 1, and
locating said received apparatus within said heated water supply.

12. A method according to claim 11, wherein water flows through a heat exchanger in the boiler.

13. A method according to claim 11 or claim 12, wherein the flow of heated water increases as the temperature of the water increases.

## Patentansprüche

1. Vorrichtung (201) zur Steuerung des Durchflusses erwärmten Wassers von einem Heizkessel zu einem Wasserablauf, welche Folgendes beinhaltet:
ein Hauptgehäuse (301), das einen Zulauf (302), einen Ablauf (303) und einen sich von besagtem Zulauf zu besagtem Ablauf erstreckenden Durchflussweg (304) umgrenzt,
eine verstellbare Öffnung (601) zwischen besagtem Zulauf und besagtem Ablauf,
eine ständige Öffnung (602) zwischen besagtem Zulauf und besagtem Ablauf, und
einen temperaturempfindlichen zur Regelung besagter verstellbarer Öffnung zwischen einer vollkommen geschlossenen Stellung und einer geöffneten Stellung konfigurierten Regelungsmechanismus; und
besagter temperaturempfindlicher Regelungsmechanismus beinhaltet ein temperaturempfindliches Gerät (305), welches ein formstabiles Gehäuse (401) beinhaltet, in dem sich ein ausdehnbares Material mit einem Ausmaß an Ausdehnung befindet, das mit zunehmender Temperatur zunimmt, und einen formstabilen Stab (402), welcher ein erstes mit besagtem ausdehnbaren Material wirkverbundenes Ende hat und ein zweites Ende (403), das relativ zu besagtem Gehäuse angebracht ist, wobei besagter temperaturempfindlicher Regelungsmechanismus so konfiguriert ist, dass besagtes formstabiles Gehäuse so konfiguriert ist, dass es sich relativ zu besagtem zweiten Ende als Reaktion auf eine Änderung der Wassertemperatur bewegt, so dass der vollständige Wasserdurchfluss bei erhöhter Temperatur zunimmt; dadurch ausgezeichnet, dass:
besagte ständige Öffnung ein Regelungsgerät (309) zur Regelung des Ausmaßes ständigen Durchflusses beinhaltet.

2. Vorrichtung gemäß Patentanspruch 1, bei der besagtes ausdehnbares Material ein Wachs ist.

3. Vorrichtung gemäß Patentanspruch 1 oder Patentanspruch 2, bei der die verstellbare Öffnung im Wesentlichen gleichachsig zu einem zentralen Wasserdurchfluss liegt und besagte ständige Öffnung ein Loch an der Außenseite eines Randflansches darstellt.

4. Vorrichtung gemäß Patentanspruch 3, bei der besagter Randflansch zur Gewährleistung der ständigen Öffnung eine Vielzahl von Löchern an der Außenseite enthält.

5. Vorrichtung gemäß Patentanspruch 1, bei der besagtes Regelungsgerät ein Gewindestück (309) enthält.

6. Vorrichtung gemäß Patentanspruch 5, bei der besagtes Gewindestück einen Abführkanal dadurch umgrenzt.

7. Vorrichtung gemäß Patentanspruch 6, bei der besagtes Gewindestück sich so in die ständige Öffnung erstreckt, dass der Bereich der zulaufseitigen Öffnung des Abführkanals, der Wasserdurchfluss ausgesetzt ist, als Reaktion auf eine Drehung besagten Gewindestückes geregelt wird.

8. Vorrichtung gemäß einem beliebigen der Patentansprüche 1 bis 7, bei der besagtes Hauptgehäuse so konfiguriert ist, dass es auf einer Linie mit und im Wesentlichen gleichachsig zu Warmwasserversorgungsleitungen (205) gehalten wird.

9. Ein System zur Lieferung erwärmten Wassers, welches Folgendes beinhaltet:
einen Heizkessel (202);
eine Vielzahl von Wasserabläufen (203);
eine Versorgungsleitung für kaltes Wasser (204) für besagten Heizkessel;
eine Versorgungsleitung für erwärmtes Wasser (205) ab besagtem Heizkessel, um einen Wasserabfluss mit erwärmtem Wasser zu versorgen; und
Vorrichtung (201) zur Steuerung des Durchflusses erwärmten Wassers von einem Heizkessel zu einem Ablauf wie in Patentanspruch 1 geltend gemacht und innerhalb besagter Versorgungsleitung für erwärmtes Wasser gelegen.

10. Ein System zur Lieferung erwärmten Wassers gemäß Patentanspruch 9, bei dem besagter Heizkessel einen Wärmetauscher für die Versorgung mit heißem Wasser enthält, bei dem bei der Wahrnehmung des Durchflusses von Wasser zu einem besagter Wasserabläufe erwärmtes Wasser zu besagtem Wärmetauscher geleitet wird.

11. Ein Verfahren zur Versorgung eines Wasserablaufes mit erwärmtem Wasser ab einem Heizkessel durch eine Versorgungsleitung für erwärmtes Wasser, wobei besagtes Verfahren folgende Schritte beinhaltet:
den Empfang der Vorrichtung gemäß Patentanspruch 1, und
die Lokalisierung besagter empfangener Vorrichtung innerhalb besagter Versorgungsleitung für erwärmtes Wasser.

12. Ein Verfahren gemäß Patentanspruch 11, bei dem Wasser durch einen Wärmetauscher in den Heizkessel fließt.

13. Ein Verfahren gemäß Patentanspruch 11 oder Patentanspruch 12, bei dem der Durchfluss erwärmten Wassers entsprechend der Erhöhung der Temperatur des Wassers zunimmt.

## Revendications

1. Un appareil (201) assurant la régulation du débit d'eau chauffée d'une chaudière a une prise d'eau, comprenant :
un boîtier principal (301) définissant une entrée (302), une prise d'eau (303), et une trajectoire (304) reliant ladite entrée à ladite prise d'eau,
une ouverture variable (601) entre ladite entrée et ladite prise d'eau,
une ouverture fixe (602) entre ladite entrée et ladite prise d'eau, et
un mécanisme de réglage sensible à la température, configuré pour ajuster ladite ouverture variable entre une position entièrement fermée et une position ouverte ; et
ledit mécanisme de réglage sensible à la température comprenant un dispositif sensible à la température (305) comprenant un boîtier rigide (401) renfermant une matière expansible dont le degré d'expansion augmente en fonction de la température, et une tige rigide (402), comprenant un premier bout relié en cours d'utilisation à ladite matière expansible, et un deuxième bout (403) fixe par rapport audit boîtier principal, ledit mécanisme de réglage sensible à la température étant configuré de sorte que ledit boîtier rigide soit configuré pour se déplacer par rapport audit deuxième bout en réponse à une variation de la température de l'eau afin que le débit d'eau total augmente en fonction de l'augmentation de la température ; **caractérisé par le fait que** :
ladite ouverture fixe comprend un dispositif de réglage (309) pour régler le degré de débit permanent.

2. Un appareil selon la revendication 1, dans lequel la dite matière expansible est de la cire.

3. Un appareil selon la revendication 1 ou la revendication 2, dans lequel l'ouverture variable est en grande partie coaxiale à un débit d'eau central, et ladite ouverture fixe est un orifice périphérique entouré d'une bride.

4. Un appareil selon la revendication 3, dans lequel ladite bride est dotée d'une série d'orifices périphériques formant l'ouverture fixe.

5. Un appareil selon la revendication 1, dans lequel dispositif de réglage comprend un élément fileté (309).

6. Un appareil selon la revendication 5, dans lequel ledit élément fileté définit un canal qui le traverse.

7. Un appareil selon la revendication 6, dans lequel ledit élément fileté se prolonge dans l'ouverture fixe, de façon à assurer l'ajustage de la zone de l'ouverture du canal en amont, exposée au débit d'eau, en réponse à la rotation dudit élément fileté.

8. Un appareil selon une quelconque des revendications 1 à 7, dans lequel ledit boîtier principal est configuré pour être maintenu dans une position alignée aux tuyaux d'alimentation en eau chaude (205) et substantiellement coaxiale à ces derniers.

9. Un système de refoulement d'eau chauffée, comprenant :
une chaudière (202) ;
une série de prises d'eau (203) ;
une alimentation en eau froide (204) pour ladite chaudière ;
une fourniture d'eau chauffée (205), provenant de ladite chaudière, apportant l'eau chauffée à une prise d'eau ; et
un appareil (201) assurant la régulation du débit d'eau chauffée d'une chaudière à une prise d'eau, conforme à la revendication 1, et situé dans ladite fourniture d'eau chauffée.

10. Un système de refoulement d'eau chauffée, selon la revendication 9, dans lequel ladite chaudière comprend un échangeur de chaleur pour la fourniture d'eau chaude, et dans lequel l'eau chauffée est envoyée audit échangeur de chaleur lors de la détection du débit d'eau à une desdites prises d'eau.

11. Une méthode de fourniture d'eau chauffée d'une chaudière, par une fourniture d'eau chauffée, à une prise d'eau, cette méthode comportant
la réception d'un appareil conformément à la revendication 1, et
le positionnement dudit appareil reçu dans ladite fourniture d'eau chauffée.

12. Une méthode selon la revendication 11, dans laquelle l'eau s'écoule dans la chaudière, en passant par un échangeur de chaleur.

13. Une méthode selon la revendication 11 ou la revendication 12, dans laquelle le débit d'eau chauffée augmente au fur et à mesure de l'augmentation de la température de l'eau.
